# EUROPÄISCHE PATENTANMELDUNG

(11) **EP 3 967 886 A1**
(43) Veröffentlichungstag der Anmeldung: **16.03.2022**
(21) Anmeldenummer: 21170754.2
(22) Anmeldetag: 27.04.2021
(51) Int. Cl.: F15B 11/028, F15B 11/032, F15B 11/06, F15B 11/072, F16F 9/02

(54) **GASFEDERSYSTEM FÜR EINEN HÖHENVERSTELLBAREN TISCH, HÖHENVERSTELLBARER TISCH UND VERFAHREN ZUM BETREIBEN DES GASFEDERSYSTEMS**

(30) Priorität: 14.09.2020 DE 102020211523
(71) Anmelder: Kesseböhmer Holding KG, 49152 Bad Essen (DE)
(72) Erfinder: KÖDER, Michael, 73207 Plochingen (DE); STIEFELMAIER, Philipp, 73235 Weilheim (DE); SCHENKE, Arne, 73728 Esslingen (DE)
(74) Vertreter: Prüfer & Partner mbB Patentanwälte · Rechtsanwälte

(57) **Zusammenfassung**

Ein Gasfedersystem (3) für einen höhenverstellbaren Tisch (1) weist eine Gasfeder (4) mit einem Gasfederzylinder (6) mit einem darin vorgesehenen Gasraum (9), einen darin angeordneten Gasfederkolben (7) und eine damit verbundene Gasfederkolbenstange (8) auf. Das Gasfedersystem (3) weist ferner eine mit dem Gasraum (9) verbundene Gasschnittstelle (10), womit sie zumindest Gas von außerhalb in das Gasfedersystem (3) einbringt, einen Übertragungszylinder (12) mit einem Übertragungskolben (13), einer ersten Übertragungskammer (14) und einer durch den Übertragungskolben (13) getrennten zweiten Übertragungskammer (15), und eine Hydraulikpumpe (16) auf. Der Gasraum (9) ist mit der ersten Übertragungskammer (14) verbunden und die Hydraulikpumpe (16) ist mit der zweiten Übertragungskammer (15) verbunden. Die Hydraulikpumpe (16) fördert Hydrauliköl und der Übertragungskolben (13) wird von dem durch die Hydraulikpumpe (16) geförderten Hydrauliköl in Richtung der ersten Übertragungskammer (14) bewegt, um einen Druck in der ersten Übertragungskammer (14) und dem Gasraum (9) zu erhöhen.

## Beschreibung

Die Erfindung betrifft ein Gasfedersystem für einen höhenverstellbaren Tisch, einen höhenverstellbaren Tisch und ein Verfahren zum Betreiben des Gasfedersystems, insbesondere für einen Tisch mit wechselnden Beladungen.

Das Dokument WO 2014/183775 A1 beschreibt eine einstellbare Gasdruckfeder, eine höhenverstellbaren Säule mit einer Gasdruckfeder und ein Möbel mit der höhenverstellbaren Säule, wobei ein Gasraum der Gasfeder mit einem Gasspeicher verbunden ist. Das Volumen des Gasspeichers kann über einen durch eine Gewindespindel verschiebbaren Kolben verändert werden, wodurch der Systemdruck und somit die Hubkraft der Gasfeder verändert werden können. Bei einer dauerhaften Änderung einer Last auf einer Tischplatte, beispielsweise durch Aufstellen oder Entfernen eines Druckers oder Anbringen einer Sichtschutzwand, kann so die Hubkraft der Gasfeder angepasst werden und wieder eine ergonomische Betätigung der Höheneinstellung realisiert werden. Die Gewindespindel wird entweder manuell durch eine Kurbel oder beispielsweise durch einen Akkuschrauber angetrieben.

Ein Einstellen des Systemdrucks und somit der Hubkraft der Gasfeder über ein Verändern des Volumens des Gasspeichers mittels einer Gewindespindel ist jedoch aufwendig und, insbesondere bei der Verwendung des Akkuschraubers, mit großem Zeitaufwand verbunden, falls dieser nicht unmittelbar verfügbar ist.

Die der Erfindung zugrunde liegende Aufgabe liegt daher darin, dass obige Problem zu lösen und ein Gasfedersystem, einen höhenverstellbaren Tisch und ein Verfahren zum Betreiben des Gasfedersystems bereitzustellen, das eine einfache und schnelle Verstellung einer Kraft einer Gasfeder ermöglicht.

Die Aufgabe wird durch ein Gasfedersystem gemäß den Ansprüchen 1, 5, 9 und 12, einen höhenverstellbaren Tisch gemäß Anspruch 14 sowie Verfahren gemäß Anspruch 15 und 17 gelöst. Vorteilhafte Weiterentwicklungen sind in den abhängigen Ansprüchen enthalten.

Gemäß einem Aspekt der Erfindung weist ein Gasfedersystem für einen höhenverstellbaren Tisch eine Gasfeder mit einem Gasfederzylinder mit einem darin vorgesehenen Gasraum, einem in dem Gasraum angeordneten Gasfederkolben und einer mit dem Gasfederkolben verbundenen Gasfederkolbenstange auf. Ferner weist das Gasfedersystem eine Gasschnittstelle auf, die mit dem Gasraum verbunden ist, wobei die Gasschnittstelle zumindest dazu ausgebildet ist, Gas von außerhalb des Gasfedersystems in das Gasfedersystem einzubringen. Weiterhin weist das Gasfedersystem einen Übertragungszylinder mit einem Übertragungskolben, einer ersten Übertragungskammer und einer zweiten Übertragungskammer auf, wobei die erste Übertragungskammer und die zweite Übertragungskammer durch den Übertragungskolben getrennt sind, und weist außerdem eine Hydraulikpumpe auf, wobei der Gasraum der Gasfeder mit der ersten Übertragungskammer verbunden ist, die Hydraulikpumpe mit der zweiten Übertragungskammer verbunden ist, die Hydraulikpumpe dazu ausgebildet ist, Hydrauliköl zu fördern, und der Übertragungskolben dazu ausgebildet ist, von dem durch die Hydraulikpumpe geförderten Hydrauliköl in Richtung der ersten Übertragungskammer bewegt zu werden, um einen Druck in der ersten Übertragungskammer und dem Gasraum der Gasfeder zu erhöhen.

Durch den Einsatz des Übertragungszylinders und der Hydraulikpumpe kann, da ein eingesetztes Hydrauliköl inkompressibel ist, ein Volumen der ersten Übertragungskammer präzise verändert werden und somit ein Druck in dem Gasraum in dem Gasfederzylinder schnell und genau erhöht werden, um somit eine Gasfederkraft zu erhöhen. Da die Pumpe eine große Fördermenge ermöglicht, ist es nicht erforderlich, einen Akkuschrauber einzusetzen, um eine rasche Einstellung der Gasfederkraft zu ermöglichen.

Über die Gasschnittstelle, die mit dem Gasraum verbunden ist, ist es möglich, Gas von außerhalb in das Gasfedersystem einzubringen, um den Druck in dem Gasraum und somit die Gasfederkraft, beispielsweise werkseitig, voreinzustellen, so dass beispielsweise eine ergonomische Höhenverstellung des Tisches bei einer vordefinierten Beladung möglich ist.

In einer vorteilhaften Ausgestaltung des Gasfedersystems ist die Hydraulikpumpe dazu ausgebildet, von Hand betätigt zu werden.

Bei einer Betätigung von Hand ist es nicht erforderlich, den Aufwand zu betreiben, ein Werkzeug oder beispielsweise einen Akkuschrauber bereitzustellen, um die Gasfederkraft und somit beispielsweise die Hubkraft der Gasfeder nach einer Erhöhung der Beladung der Tischplatte zu erhöhen.

Gemäß einer weiteren vorteilhaften Ausgestaltung des Gasfedersystems weist das Gasfedersystem ferner ein Hydraulikölrückschlagventil auf, das zwischen der Hydraulikpumpe und der zweiten Übertragungskammer angeordnet ist, und das dazu ausgebildet ist, ein Strömen des Hydrauliköls von der zweiten Übertragungskammer zu der Hydraulikpumpe hin zu verhindern und ein Strömen des Hydrauliköls von der Hydraulikpumpe zu der zweiten Übertragungskammer hin zu ermöglichen.

Durch das Vorsehen des Hydraulikölrückschlagventils kann Öl von der Hydraulikpumpe zu der zweiten Übertragungskammer gefördert werden, aber es wird verhindert, dass sich ein Öldruck in der zweiten Übertragungskammer und somit ein Gasdruck in der ersten Übertragungskammer und dem Gasraum der Gasfeder durch eine Leckage in der Hydraulikpumpe verringert. Das Hydraulikölrückschlagventil kann entweder in einer Verbindungsleitung zwischen der Hydraulikpumpe und dem Übertragungszylinder enthalten sein oder in der Hydraulikpumpe integriert sein.

Bei einer weiteren vorteilhaften Ausgestaltung des Gasfedersystems weist das Gasfedersystem ein Ölreservoir und ein Hydrauliköldruckablassventil auf, wobei das Hydrauliköldruckablassventil dazu ausgebildet ist, eine direkte Verbindung zwischen der zweiten Übertragungskammer und dem Ölreservoir herzustellen oder abzutrennen.

Durch das Vorsehen des Hydrauliköldruckablassventils besteht die Möglichkeit, den Öldruck in der zweiten Übertragungskammer und somit den Gasdruck in der ersten Übertragungskammer und in dem Gasraum der Gasfeder zu reduzieren, um, beispielsweise bei einer verringerten Beladung der Tischplatte, die Gasfederkraft zu reduzieren. Da das Ölreservoir vorgesehen ist, ist es möglich, das überschüssige Öl von der zweiten Übertragungskammer aufzufangen und gegebenenfalls bei einer späteren Erhöhung der Beladung der Tischplatte wieder der zweiten Übertragungskammer zuzuführen.

Gemäß einem anderen Aspekt der Erfindung weist ein Gasfedersystem eine Gasfeder mit einem Gasfederzylinder mit einem darin vorgesehenen Gasraum, einem in dem Gasraum angeordneten Gasfederkolben und einer mit dem Gasfederkolben verbundenen Gasfederkolbenstange auf. Ferner weist das Gasfedersystem eine Gasschnittstelle, die mit dem Gasraum der Gasfeder verbunden ist, wobei die Gasschnittstelle zumindest dazu ausgebildet ist, Gas von außerhalb des Gasfedersystems in das Gasfedersystem einzubringen, eine Kolbenpumpe, die mit dem Gasraum der Gasfeder verbunden ist, und die dazu ausgebildet ist, Gas aus der Atmosphäre zu dem Gasraum der Gasfeder zu fördern, auf, wobei die Kolbenpumpe einen Antriebsmechanismus aufweist, der dazu ausgebildet ist, gemäß dem Kniehebelprinzip zu funktionieren.

Durch den Einsatz des Antriebsmechanismus' gemäß dem Kniehebelprinzip ist es möglich, den Gasdruck in dem Gasraum der Gasfeder mittels der Kolbenpumpe mit geringem Kraftaufwand und schnell zu erhöhen. Durch das Kniehebelprinzip kann aus einer Stellung der Kolbenpumpe vor einer Pumpbewegung bei einem relativ geringen erforderlichen Kraftaufwand ein großer Weg eines Kolbens der Kolbenpumpe, also eine schnelle Förderung eines Gases, ermöglicht werden. Ferner kann der Kraftaufwand für die Bewegung in einer Stellung des Kolbens der Kolbenpumpe am Ende der Pumpbewegung bei einem Aufbau eines hohen Drucks merklich reduziert werden. Somit ist ein effektives und rasches Erhöhen des Drucks in dem Gasraum der Gasfeder und damit der Kraft der Gasfeder möglich. Darüber hinaus ermöglicht eine solche Ausführung eine kompakte Bauweise mit wenigen Bauteilen.

Auch gemäß diesem Aspekt ist es über die Gasschnittstelle, die mit dem Gasraum verbunden ist, möglich, Gas von außerhalb in das Gasfedersystem einzubringen, um den Druck in dem Gasraum und somit die Gasfederkraft, beispielsweise werkseitig, voreinzustellen, um beispielsweise eine ergonomische Höhenverstellung des Tisches bei einer vordefinierten Beladung zu ermöglichen.

Gemäß einer vorteilhaften Ausgestaltung des Gasfedersystems weist die Kolbenpumpe einen Pumpenzylinder und einem Pumpenkolben mit einer damit verbundenen in einer vorbestimmten Richtung bewegbaren Pumpenkolbenstange auf. Ferner weist der Antriebsmechanismus eine relativ zu dem Pumpenzylinder in der vorbestimmten Richtung bewegbare erste Lagerungsvorrichtung, wobei die Pumpenkolbenstange mit der ersten Lagerungsvorrichtung verbunden ist, eine relativ zu dem Pumpenzylinder ortsfeste zweite Lagerungsvorrichtung, einen mit der ersten Lagerungsvorrichtung gelenkig verbundenen ersten Hebel, und einen mit der zweiten Lagerungsvorrichtung und mit dem ersten Hebel jeweils gelenkig verbundenen zweiten Hebel auf, um den Antriebsmechanismus gemäß dem Kniehebelprinzip auszubilden.

Durch die Anordnung ist eine möglichst einfache Gestaltung des Antriebs gemäß dem Kniehebelprinzip möglich.

Gemäß einer weiteren vorteilhaften Ausgestaltung des Gasfedersystems weist das Gasfedersystem ferner ein Pumprückschlagventil auf, das dazu ausgebildet ist, ein Strömen des Gases von dem Gasraum der Gasfeder zu der Kolbenpumpe hin zu verhindern und ein Strömen des Gases von der Kolbenpumpe zu dem Gasraum der Gasfeder hin zu ermöglichen.

Durch das Vorsehen des Pumprückschlagventils kann das Gas von der Kolbenpumpe zu dem Gasraum der Gasfeder gefördert werden, aber es wird verhindert, dass sich der Gasdruck in dem Gasraum durch eine Leckage in der Kolbenpumpe verringert.

Das Pumprückschlagventil kann entweder in einer Verbindungsleitung zwischen der Kolbenpumpe und dem der Gasfeder enthalten sein oder in der Kolbenpumpe integriert sein.

Bei einer weiteren vorteilhaften Ausgestaltung des Gasfedersystems weist das Gasfedersystem ferner ein Entlüftungsventil auf, das in einer Leitung zwischen der Kolbenpumpe und dem Gasraum der Gasfeder vorgesehen ist, und das dazu ausgebildet ist, das Gas aus dem Gasfedersystem abzulassen.

Durch das Vorsehen des Entlüftungsventils besteht die Möglichkeit, den Gasdruck in dem Gasraum der Gasfeder zu reduzieren, um, beispielsweise bei einer verringerten Beladung der Tischplatte, die Gasfederkraft zu reduzieren.

Gemäß einem anderen Aspekt der Erfindung weist ein Gasfedersystem eine Gasfeder mit einem Gasfederzylinder mit einem darin vorgesehenen Gasraum, einem in dem Gasraum angeordneten Gasfederkolben und einer mit dem Gasfederkolben verbundenen Gasfederkolbenstange, sowie eine Kolbenpumpe, die mit dem Gasraum der Gasfeder verbunden ist und die dazu ausgebildet ist, Gas in den Gasraum der Gasfeder zu fördern, auf. Die Kolbenpumpe weist einen mit dem Gasraum der Gasfeder verbundenen ersten Pumpengasraum, einen Pumpenkolben, einen zweiten Pumpengasraum, der durch den Pumpenkolben von dem ersten Pumpengasraum abgegrenzt ist, ein Pumprückschlagventil, das dazu ausgebildet ist, ein Strömen des Gases von dem Gasraum zu dem ersten Pumpengasraum hin zu verhindern und ein Strömen des Gases von dem ersten Pumpengasraum zu dem Gasraum hin zu ermöglichen, ein Kolbenrückschlagventil, das dazu ausgebildet ist, mit dem Pumpenkolben bewegbar zu sein und ein Strömen des Gases von dem ersten Pumpengasraum zu dem zweiten Pumpengasraum hin zu verhindern und ein Strömen des Gases von dem zweiten Pumpengasraum zu dem ersten Pumpengasraum hin zu ermöglichen, ein Einlassrückschlagventil, das dazu ausgebildet ist, ein Strömen des Gases aus dem zweiten Pumpengasraum zu verhindern und ein Strömen des Gases in den zweiten Pumpengasraum zu ermöglichen, auf. Ferner weist das Gasfedersystem einen zweiten Gasspeicher, der mit dem Einlassrückschlagventil verbunden ist, ein Gasablassventil, das einerseits mit dem Gasraum der Gasfeder und andererseits mit dem Einlassrückschlagventil und dem zweiten Gasspeicher verbunden ist, und eine Gasschnittstelle, die mit dem zweiten Gasspeicher verbunden ist, auf, wobei die Gasschnittstelle zumindest dazu ausgebildet ist, Gas von außerhalb des Gasfedersystems in das Gasfedersystem einzubringen.

Durch die Verbindung des zweiten Gasspeichers mit dem Einlassrückschlagventil der Kolbenpumpe wird eine manuell aufzubringende Betätigungskraft auf den Kolben der Kolbenpumpe verringert und somit das Pumpen des Gases zu dem Gasraum der Gasfeder hin, um den Druck in dem Gasraum und somit die Gasfederkraft zu erhöhen, erleichtert. Ferner wird die Anzahl von notwendigen Pumphüben gegenüber einer Befüllung aus der Atmosphäre deutlich reduziert.

Das Gasablassventil mit seinen Verbindungen ermöglicht es, den Druck in dem Gasraum der Gasfeder zu reduzieren, um, beispielsweise bei einer verringerten Beladung der Tischplatte, die Gasfederkraft zu reduzieren, wobei das Gas jedoch nicht in die Umgebung abgelassen wird, sondern zu dem zweiten Gasspeicher, um bei einer nachfolgend erforderlichen Erhöhung des Drucks in dem Gasraum der Gasfeder wieder bereit zu stehen.

Aufgrund des Vorsehens des Pumprückschlagventils kann das Gas von der Kolbenpumpe zu dem Gasraum der Gasfeder gefördert werden, aber es wird verhindert, dass sich der Gasdruck in dem Gasraum durch eine Leckage in der Kolbenpumpe verringert. Das Pumprückschlagventil kann entweder in einer Verbindungsleitung zwischen der Kolbenpumpe und dem Gasraum der Gasfeder enthalten sein oder in der Kolbenpumpe integriert sein.

In einer vorteilhaften Ausgestaltung des Gasfedersystems weist es einen ersten Gasspeicher auf, der mit dem Gasraum der Gasfeder verbunden ist.

Durch den ersten Gasspeicher wird ein Gasvolumen des Gasfedersystems auf der Seite des Gasraums der Gasfeder vergrößert, um eine Federkennlinie der Gasfeder abzuflachen, sodass die Hubkraft der Gasfeder über ihren gesamten Verstellbereich möglichst konstant bleibt.

Gemäß einer weiteren vorteilhaften Ausgestaltung des Gasfedersystems weist es eine erste Druckanzeigeeinrichtung auf, die mit dem Gasraum der Gasfeder verbunden ist.

Durch das Vorsehen der ersten Druckanzeigeeinrichtung kann ein tatsächlicher Fülldruck des Gasraums der Gasfeder überwacht werden. Bei einer entsprechenden Kalibrierung ist es auch möglich, direkt eine Hubkraft der Gasfeder abzulesen.

Gemäß einem weiteren Aspekt der Erfindung weist ein Gasfedersystem eine Gasfeder mit einem Gasfederzylinder mit einem darin vorgesehenen Gasraum, einem in dem Gasraum angeordneten Gasfederkolben und einer mit dem Gasfederkolben verbundenen Gasfederkolbenstange auf, wobei das Gasfedersystem ferner eine Gasschnittstelle, die mit dem Gasraum verbunden ist, und eine Füllkartusche mit einem unveränderbaren Gasvolumen, die mit der Gasschnittstelle verbindbar ist, aufweist.

Durch dieses Gasfedersystem kann, insbesondere wenn die Füllkartusche mit einem Gas mit Hochdruck befüllt ist, der Gasraum der Gasfeder einfach und rasch durch Anschließen der Füllkartusche an der Gasschnittstelle befüllt werden.

In einer vorteilhaften Ausgestaltung des Gasfedersystems weist es ferner einen Anschlussblock, der einerseits mit der Gasschnittstelle und andererseits mit der Füllkartusche verbindbar ist, auf, wobei der Anschlussblock mit zumindest eines von einem Absperrventil, einem Druckminderer oder -begrenzer und einer zweiten Druckanzeige aufweist.

Das Vorsehen des Anschlussblocks ermöglicht eine komfortable und sichere Bedienung des Gasfedersystems bei einer Veränderung der Gasfederkraft.

Entsprechend einem weiteren Aspekt der Erfindung ist ein höhenverstellbarer Tisch mit einem Gasfedersystem versehen.

Bei einem solchen Tisch ist es möglich, eine Hubkraftanpassung ohne großen Kraftaufwand und rasch durchzuführen.

Gemäß einem weiteren Aspekt der Erfindung enthält ein Verfahren zum Betreiben eines Gasfedersystems den Schritt: Pumpen des Hydrauliköls mittels der Hydraulikpumpe in die zweite Übertragungskammer, so dass der Übertragungskolben in Richtung der ersten Übertragungskammer bewegt wird und den Druck in der ersten Übertragungskammer erhöht, um eine Kraft der Gasfeder zu erhöhen.

Durch den Einsatz des Übertragungszylinders und der Hydraulikpumpe kann, da ein eingesetztes Hydrauliköl inkompressibel ist, ein Volumen der ersten Übertragungskammer präzise verändert werden und somit ein Druck in dem Gasraum in dem Gasfederzylinder schnell und genau erhöht werden, um den Druck in dem Gasraum und somit die Gasfederkraft zu erhöhen. Da die Pumpe eine große Fördermenge ermöglicht, ist es nicht erforderlich, einen Akkuschrauber einzusetzen, um eine rasche Einstellung der Gasfederkraft zu ermöglichen.

Bei einer vorteilhaften Ausgestaltung des Verfahrens enthält es den Schritt: Öffnen des Hydrauliköldruckablassventils um eine Verbindung zwischen der zweiten Übertragungskammer und dem Ölreservoir herzustellen und einen Öldruck in der zweiten Übertragungskammer zu verringern, so dass der Übertragungskolben in Richtung der zweiten Übertragungskammer bewegt wird und der Druck in der ersten Übertragungskammer verringert wird, um eine Kraft der Gasfeder zu verringern.

Durch das Öffnen des Hydrauliköldruckablassventils besteht die Möglichkeit, den Öldruck in der zweiten Übertragungskammer und somit den Gasdruck in der ersten Übertragungskammer und in dem Gasraum der Gasfeder einfach zu reduzieren, um, beispielsweise bei einer verringerten Beladung der Tischplatte, die Gasfederkraft zu reduzieren. Da das Ölreservoir vorgesehen ist, ist es möglich, das überschüssige Öl von der zweiten Übertragungskammer aufzufangen und gegebenenfalls bei einer späteren Erhöhung der Beladung der Tischplatte wieder der zweiten Übertragungskammer zuzuführen.

Gemäß einem anderen Aspekt der Erfindung enthält ein Verfahren die Schritte: Pumpen von Gas von dem zweiten Gasspeicher zu dem Gasraum der Gasfeder zum Erhöhen einer Kraft der Gasfeder, und Ablassen des Gases aus dem Gasraum der Gasfeder mittels des Gasablassventils zu dem zweiten Gasspeicher zum Verringern der Kraft der Gasfeder.

Durch das Pumpen des Gases von dem zweiten Gasspeicher wird eine manuell aufzubringende Betätigungskraft auf den Kolben der Kolbenpumpe verringert und somit das Pumpen des Gases zu dem Gasraum der Gasfeder hin, um den Druck in dem Gasraum und somit die Gasfederkraft zu erhöhen, erleichtert. Ferner wird die Anzahl von notwendigen Pumphüben gegenüber einer Befüllung aus der Atmosphäre deutlich reduziert. Darüber hinaus kann der Druck in dem Gasraum der Gasfeder reduziert werden, um, beispielsweise bei einer verringerten Beladung der Tischplatte, die Gasfederkraft zu reduzieren, wobei das Gas jedoch nicht in die Umgebung abgelassen wird, sondern zu dem zweiten Gasspeicher, um bei einer nachfolgend erforderlichen Erhöhung des Drucks in dem Gasraum der Gasfeder wieder bereitzustehen.

Nachfolgend wird die Erfindung anhand von Ausführungsbeispielen unter Bezugnahme auf die beigefügten Zeichnungen erläutert.

Insbesondere zeigt:
- Fig. 1: einen höhenverstellbaren Tisch mit einem erfindungsgemäßen Gasfedersystem;
- Fig. 2: eine schematische Darstellung einer ersten Ausführungsform des Gasfedersystems;
- Fig. 3: eine schematische Darstellung einer zweiten Ausführungsform des Gasfedersystems;
- Fig. 4: eine schematische Darstellung einer dritten Ausführungsform des Gasfedersystems; und
- Fig. 5: eine schematische Darstellung einer vierten Ausführungsform des Gasfedersystems.

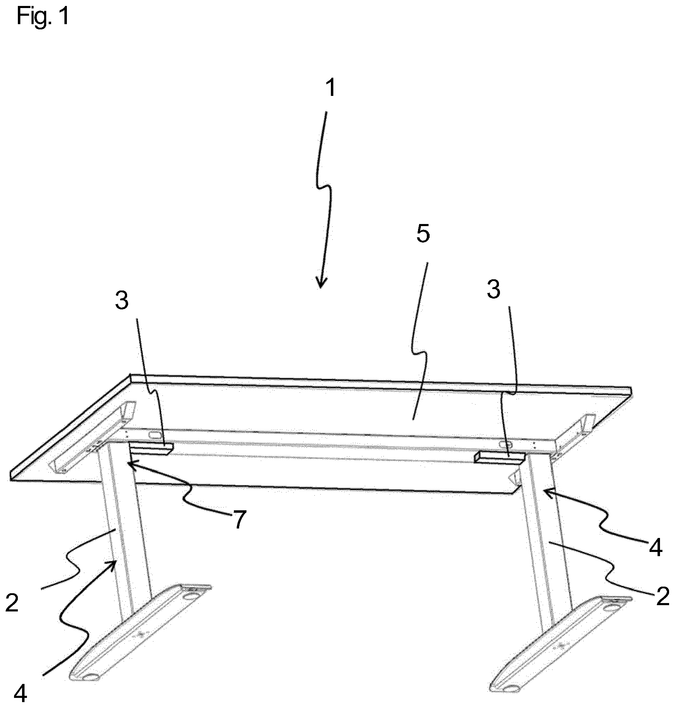

**Fig. 1** zeigt einen höhenverstellbaren Tisch 1 mit zwei höhenverstellbaren Säulen 2 als Tischbeine, die jeweils mit einem Gasfedersystem 3 versehen sind. Die Gasfedersysteme 3 weisen jeweils eine Gasfeder 4 innerhalb der zwei höhenverstellbaren Säulen 2 auf, um eine Länge der höhenverstellbaren Säulen 2 zu verstellen. Ferner weist der höhenverstellbaren Tisch 1 eine Tischplatte 5 auf, die mittels der zwei höhenverstellbaren Säulen 2 höhenverstellbarer ist.

Alternativ weist der Tisch nicht zwei höhenverstellbaren Säulen 2 auf, sondern entweder nur eine höhenverstellbaren Säule 2 oder mehr als zwei höhenverstellbare Säulen 2. Weiterhin alternativ ist das Gasfedersystem 3 nicht in einem höhenverstellbaren Tisch 1 vorgesehen, sondern in einem anderen Möbel mit einer kraftunterstützten verstellbaren Komponente. Die Gasfeder ist in dieser Anwendung als Druckgasfeder ausgeführt, kann alternativ jedoch auch als Zuggasfeder ausgeführt sein.

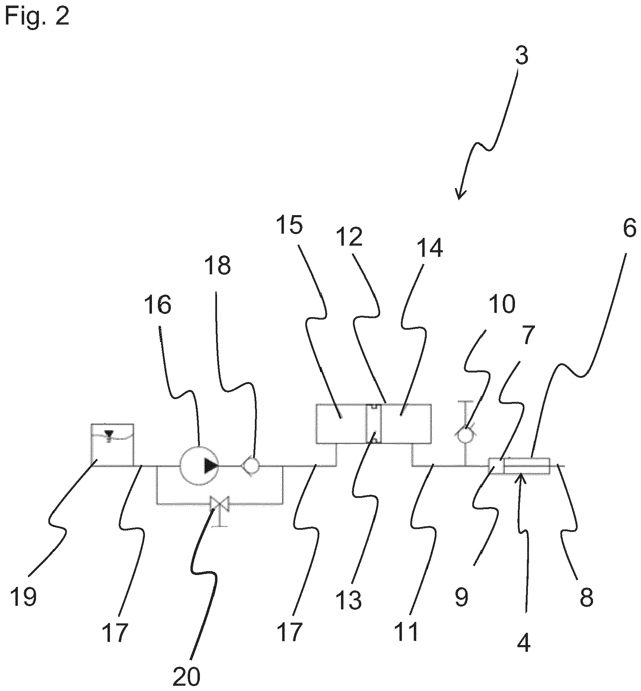

**Fig. 2** zeigt eine schematische Darstellung einer ersten Ausführungsform des Gasfedersystems 3.

Die Gasfeder 4 weist einen Gasfederzylinder 6 und einen in dem Gasfederzylinder 6 angeordneten Gasfederkolben 7 auf. Der Gasfederkolben 7 ist mit einer Gasfederkolbenstange 8 verbunden und begrenzt einen Gasraum 9 in dem Gasfederzylinder 6.

Das Gasfedersystem 3 weist eine Gasschnittstelle 10 auf, die mit dem Gasraum 9 der Gasfeder 4 verbunden ist und zumindest dazu ausgebildet ist, Gas von außerhalb des Gasfedersystems 3 in der das Gasfedersystem 3 einzubringen. Die Gasschnittstelle 10 ist über eine Gasleitung 11 direkt mit dem Gasraum 9 verbunden. Alternativ kann die Gasschnittstelle 10 auch beispielsweise in der Gasfeder 4 so integriert sein, dass sie mit dem Gasraum 9 der Gasfeder 4 verbunden ist. Die Gasschnittstelle 10 ist in Fig. 2 als ein Rückschlagventil dargestellt. Alternativ ist es auch möglich, dass beispielsweise ein Absperrventil als die Gasschnittstelle 10 vorgesehen ist.

Ferner weist das Gasfedersystem 3 einen Übertragungszylinder 12 auf, um einen Öldruck auf einen Gasdruck zu übertragen. Der Übertragungszylinder 12 weist einen Übertragungskolben 13, eine erste Übertragungskammer 14 und eine zweite Übertragungskammer 15 auf. Die erste Übertragungskammer 14 und die zweite Übertragungskammer 15 sind durch den Übertragungskolben 13 getrennt.

Darüber hinaus weist das Gasfedersystem 3 eine Hydraulikpumpe 16 auf, die dazu ausgebildet ist, ein Hydrauliköl zu fördern. Die Hydraulikpumpe 16 ist dazu ausgebildet, über eine Kurbel von Hand betätigt zu werden. Alternativ besteht auch die Möglichkeit, die Hydraulikpumpe über einen Hebel von Hand zu betätigen oder mittels eines Motors zu betätigen.

Der Gasraum 9 der Gasfeder 4 ist mittels der Gasleitung 11 mit der ersten Übertragungskammer 14 verbunden. Alternativ können der Übertragungszylinder 12 und die Gasfeder 4 integral ausgebildet sein. Die Hydraulikpumpe 16 ist mittels einer Ölleitung 17 mit der zweiten Übertragungskammer 15 verbunden. Der Übertragungskolben 13 ist dazu ausgebildet, von dem durch die Hydraulikpumpe 16 geförderten Hydrauliköl in Richtung der ersten Übertragungskammer 14 bewegt zu werden, sodass der Übertragungskolben 13 den Druck des Hydrauliköls in den Druck eines Gases überträgt, um einen Druck in der ersten Übertragungskammer 14 und dem Gasraum 9 der Gasfeder 4 zu erhöhen, um somit eine höhere Gasfederkraft einzustellen.

Das Gasfedersystem 3 weist ferner ein Hydraulikölrückschlagventil 18 auf, das in der Ölleitung 17 zwischen der Hydraulikpumpe 16 und der zweiten Übertragungskammer 15 angeordnet ist. Das Hydraulikölrückschlagventil 18 ist dazu ausgebildet, einströmendes Hydrauliköl von der zweiten Übertragungskammer 15 zu der Hydraulikpumpe 16 hin zu verhindern und einströmendes Hydrauliköl von der Hydraulikpumpe 16 zu der zweiten Übertragungskammer 15 hin zu ermöglichen. Alternativ kann das Hydraulikölrückschlagventil 18 auch entweder in dem Übertragungszylinder 12 oder der Hydraulikpumpe 16 integriert sein, oder, insbesondere im Falle einer zuverlässig dichten Hydraulikpumpe 16, weggelassen werden.

Schließlich weist das Gasfedersystem 3 ein Ölreservoir 19 und ein Hydrauliköldruckablassventil 20 auf. Das Ölreservoir 19 ist mit dem Hydrauliköl befüllt, um es über die Ölleitung 17 für die Hydraulikpumpe 16 bereitzustellen. Das Hydrauliköldruckablassventil 20 ist so mit der Ölleitung 17 verbunden, dass es die Hydraulikpumpe 16 und das Hydraulikölrückschlagventil 18 umgeht. Somit ist das Hydrauliköldruckablassventil 20 in der Lage, eine direkte Verbindung zwischen der zweiten Übertragungskammer 15 und dem Reservoir 19 herzustellen oder abzutrennen.

In dieser Ausführungsform ist das Gasfedersystem 3 in der Form dargestellt, dass für jede Gasfeder 4 ein eigener Übertragungszylinder 12 und eine eigene Hydraulikpumpe 16 vorgesehen ist. In alternativen Ausführungsformen sind das Ölreservoir 19 und/oder die Hydraulikpumpe 16 und/oder der Übertragungszylinder 15 für mehrere Gasfedern 4 vorgesehen.

Im Betrieb wird das Gasfedersystem 3 über die Gasschnittstelle 10, beispielsweise werksseitig oder bei der Installation des höhenverstellbaren Tisches 1, mit Gas mit einem notwendigen Druck für eine ergonomische Höhenverstellung gefüllt. In einem Fall, in dem dauerhaft eine zusätzliche Last auf die Tischplatte 5 aufgebracht wird, beispielsweise durch Aufstellen eines Druckers oder einer Schutzwand, kann die Hubkraft der Gasfeder 4 angepasst werden, indem mit der handbetätigten Hydraulikpumpe 16 Hydrauliköl aus dem Ölreservoir 19 in die zweite Übertragungskammer 15 gepumpt wird. Da das Hydrauliköl inkompressibel ist, wird der Übertragungskolben 13 in Richtung der ersten Übertragungskammer 14 bewegt, sodass sich der Druck in der ersten Übertragungskammer 14 und dem Gasraum 9 der Gasfeder 4 erhöht, um die Kraft der Gasfeder 4 zu erhöhen. Diese Kraft wird über den Gasfederkolben 7 und die Gasfederkolbenstange 8 an die höhenverstellbare Säule 2 übertragen.

Zum Verringern der Kraft der Gasfeder 4 wird das Hydrauliköldruckablassventil 20 geöffnet, um eine Verbindung zwischen der zweiten Übertragungskammer 15 und dem Ölreservoir 19 herzustellen und einen Öldruck in der zweiten Übertragungskammer 15 zu verringern, sodass der Übertragungskolben 13 in Richtung der zweiten Übertragungskammer 15 bewegt wird und der Druck in der ersten Übertragungskammer 14 und dem Gasraum 9 der Gasfeder 4 verringert wird.

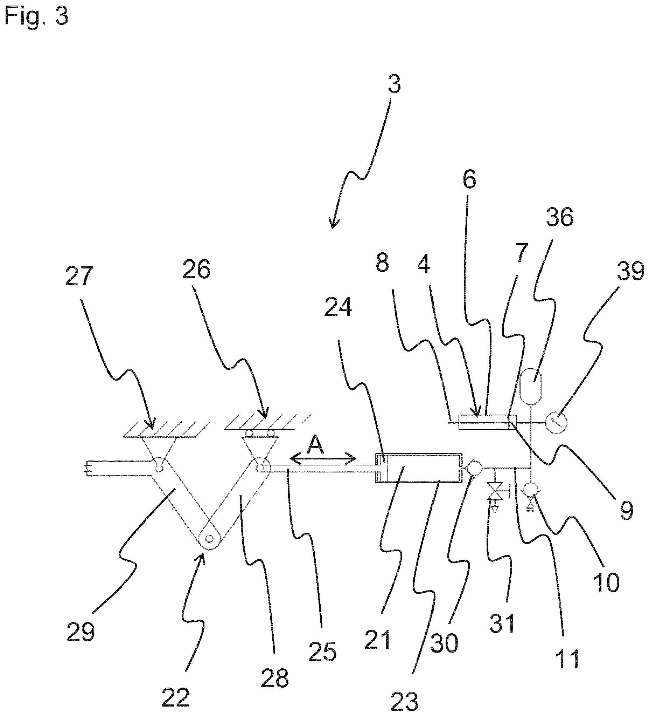

**Fig. 3** zeigt eine schematische Darstellung einer zweiten Ausführungsform des Gasfedersystems 3.

Das Gasfedersystem 3 weist, analog zu der ersten Ausführungsform, die Gasfeder 4 mit all ihren oben beschriebenen Komponenten und die Gasschnittstelle 10 auf.

In der zweiten Ausführungsform ist jedoch anstelle eines hydraulischen Betätigungssystems eine Kolbenpumpe 21 vorgesehen, die mit dem Gasraum 9 der Gasfeder 4 verbunden ist und die dazu ausgebildet ist, Gas zu dem Gasraum 9 der Gasfeder 4 zu fördern. Die Kolbenpumpe 21 weist einen Antriebsmechanismus 22 auf, der dazu ausgebildet ist, gemäß dem Kniehebelprinzip zu funktionieren.

Dazu weist die Kolbenpumpe 21 einen Pumpenzylinder 23 und einen Pumpenkolben 24 mit einer damit verbundenen in einer vorbestimmten Richtung A hin und her bewegbaren Pumpenkolbenstange 25 auf. Der Antriebsmechanismus 22 weist eine relativ zu dem Pumpenzylinder 23 in der vorbestimmten Richtung A bewegbare erste Lagerungsvorrichtung 26 auf. Die Pumpenkolbenstange 25 ist mit der ersten Lagerungsvorrichtung 26 verbunden. Ferner weist der Antriebsmechanismus 22 eine relativ zu dem Pumpenzylinder 23 ortsfeste zweite Lagerungsvorrichtung 27 auf. Schließlich weist der Antriebsmechanismus 22 einen mit der ersten Lagerungsvorrichtung 26 gelenkig verbundenen ersten Hebel 28 und einen mit der zweiten Lagerungsvorrichtung 27 und dem ersten Hebel 28 jeweils gelenkig verbundenen zweiten Hebel 29 auf, um den Antriebsmechanismus 22 gemäß dem Kniehebelprinzip auszubilden. In alternativen Ausführungsformen kann die Kolbenpumpe 21 als Mehrkolbenpumpe und/oder als doppelt wirkende Pumpe ausgeführt sein.

Das Gasfedersystem 3 weist ferner ein Pumprückschlagventil 30 auf, das dazu ausgebildet ist, ein Strömen des Gases von dem Gasraum 9 der Gasfeder 4 zu der Kolbenpumpe 21 hin zu verhindern und ein Strömen des Gases von der Kolbenpumpe 21 zu dem Gasraum 9 der Gasfeder 4 hin zu ermöglichen. Das Pumprückschlagventil 30 ist in der Gasleitung 11 zwischen der Kolbenpumpe 21 und dem Gasraum 9 der Gasfeder 4 vorgesehen. Alternativ kann das Pumprückschlagventil 30 auch entweder in der Kolbenpumpe 21 oder in der Gasfeder 4 integriert sein oder, insbesondere im Falle einer zuverlässig dichten Kolbenpumpe 21, weggelassen werden.

Schließlich weist das Gasfedersystem 3 gemäß der zweiten Ausführungsform ein Entlüftungsventil 31 auf, das in der Leitung 11 zwischen der Kolbenpumpe 21 und dem Gasraum 9 der Gasfeder 4 vorgesehen ist. Das Entlüftungsventil 31 ist dazu ausgebildet, das Gas aus dem Gasfedersystem 3 abzulassen. In alternativen Ausführungsformen kann das Entlüftungsventil an der Gasfeder 4 oder an der Kolbenpumpe 21 vorgesehen sein und, insbesondere bei der Ausführung der Gasschnittstelle 10 als Absperrhahn, kann ein separates Entlüftungsventil 31 weggelassen werden.

Das Gasfedersystem 3 gemäß der zweiten Ausführungsform weist ferner einen ersten Gasspeicher 36 und eine erste Druckanzeigeeinrichtung 39 auf, die mit dem Gasraum 9 der Gasfeder 4 verbunden sind. In alternativen Ausführungsformen des Gasfedersystems 3 ist entweder keines oder nur eines von dem ersten Gasspeicher 36 und der ersten Druckanzeigevorrichtung 39 vorgesehen.

Im Betrieb wird das Gasfedersystem 3 über die Gasschnittstelle 10 mit dem für eine ergonomische Höhenverstellung der Tischplatte 5 notwendigen Druck vorgefüllt. In einem Fall, in dem dauerhaft eine zusätzliche Last auf die Tischplatte 5 aufgebracht wird, beispielsweise durch Aufstellen eines Druckers oder einer Schutzwand, kann die Hubkraft der Gasfeder 4 angepasst werden, indem mit der Kniehebel betätigten Kolbenpumpe 21 Luft aus der Umgebung als das Gas in das Gasfedersystem 3 gepumpt wird. Zur Druckreduzierung kann das Gas über das Entlüftungsventil 31 in die Umgebung abgelassen werden.

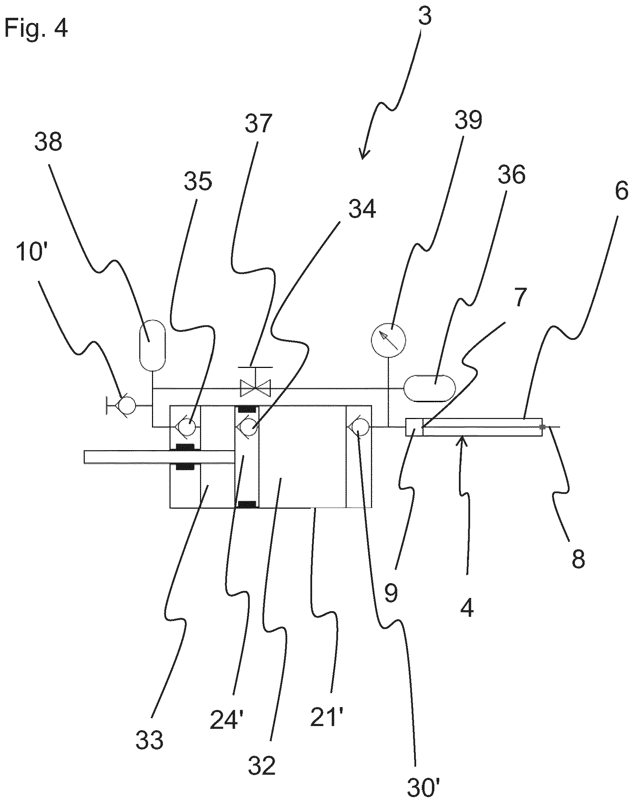

**Fig. 4** zeigt eine schematische Darstellung einer dritten Ausführungsform des Gasfedersystems 3.

Das Gasfedersystem 3 gemäß der dritten Ausführungsform weist, wie in der ersten und zweiten Ausführungsform die Gasfeder 4 mit den oben beschriebenen Komponenten auf.

Das Gasfedersystem 3 gemäß der dritten Ausführungsform weist ferner eine Kolbenpumpe 21' auf, die mit dem Gasraum 9 der Gasfeder 4 verbunden ist, und die dazu ausgebildet ist, Gas zu dem Gasraum 9 der Gasfeder 4 zu fördern. Dazu weist die Kolbenpumpe 21' einen mit dem Gasraum 9 der Gasfeder 4 verbundenen ersten Pumpengasraum 32, einen Pumpenkolben 24' und einen zweiten Pumpengasraum 33 auf, der durch den Pumpenkolben 24' von dem ersten Pumpengasraum 32 abgegrenzt ist. Ferner weist die Kolbenpumpe 21' ein Pumprückschlagventil 30' auf, das dazu ausgebildet ist, ein Strömen des Gases von dem Gasraum 9 der Gasfeder 4 zu dem ersten Pumpengasraum 32 hin zu verhindern und ein Strömen des Gases von dem ersten Pumpengasraum 32 zu dem Gasraum 9 der Gasfeder 4 hin zu ermöglichen. Außerdem weist die Kolbenpumpe 21' ein Kolbenrückschlagventil 34 auf, das dazu ausgebildet ist, mit dem Pumpenkolben 24' bewegbar zu sein und ein Strömen des Gases von dem ersten Pumpengasraum 32 zu dem zweiten Pumpengasraum 33 hin zu verhindern und ein Strömen des Gases von dem zweiten Pumpengasraum 33 zu dem ersten Pumpengasraum 32 hin zu ermöglichen. Schließlich weist die Kolbenpumpe 21' ein Einlassrückschlagventil 35 auf, das dazu ausgebildet ist, ein Strömen des Gases aus dem zweiten Pumpengasraum 33 zu verhindern und ein Strömen des Gases in den zweiten Pumpengasraum 33 zu ermöglichen.

In der dritten Ausführungsform weist das Gasfedersystem 3 einen zweiten Gasspeicher 38 auf, der mit dem Einlassrückschlagventil 35 verbunden ist, ein Gasablassventil 37, das einerseits mit dem Gasraum 9 der Gasfeder 4 und andererseits mit dem Einlassrückschlagventil 35 und dem zweiten Gasspeicher 38 verbunden ist, und eine Gasschnittstelle 10', die mit dem zweiten Gasspeicher 38 verbunden ist, wobei die Gasschnittstelle 10' zumindest dazu ausgebildet ist, Gas von außerhalb des Gasfedersystems in das Gasfedersystem 3 einzubringen.

Das Gasfedersystem 3 gemäß der dritten Ausführungsform weist ebenfalls ferner den ersten Gasspeicher 36 und die erste Druckanzeigeeinrichtung 39 auf, die mit dem Gasraum 9 der Gasfeder 4 verbunden sind. In alternativen Ausführungsformen des Gasfedersystems 3 ist entweder keines oder nur eines von dem ersten Gasspeicher 36 und der ersten Druckanzeigeeinrichtung 39 vorgesehen.

Die Kolbenpumpe 21' der dritten Ausführungsform des Gasfedersystems 3 wird mittels des Antriebsmechanismus gemäß dem Kniehebelprinzip betätigt. Alternativ kann eine Pumpenkolbenstange 25' auch direkt, beispielsweise von Hand, betätigt werden. In alternativen Ausführungsformen kann die Kolbenpumpe 21' als Mehrkolbenpumpe und/oder als doppelt wirkende Pumpe ausgeführt sein. Die Kolbenpumpe 21' der dritten Ausführungsform des Gasfedersystems 3 kann auch als eine alternative Ausführungsform der Kolbenpumpe 21 der zweiten Ausführungsform des Gasfedersystems 3 eingesetzt werden.

Im Betrieb wird das Gasfedersystem 3 über die Gasschnittstelle 10' mit dem für eine ergonomische Höhenverstellung der Tischplatte 5 notwendigen Druck vorgefüllt. In einem Fall, in dem dauerhaft eine zusätzliche Last auf die Tischplatte 5 aufgebracht wird, beispielsweise durch Aufstellen eines Druckers oder einer Schutzwand, kann die Hubkraft der Gasfeder 4 erhöht werden, indem mittels der Kolbenpumpe 21' Gas aus dem zweiten Speicher 36 zu dem Gasraum 9 der Gasfeder 4 gepumpt wird. Zur Druckreduzierung und damit zum Verringern der Kraft der Gasfeder kann das Gas über das Gasablassventil 37 zurück in den zweiten Speicher 36 abgelassen werden.

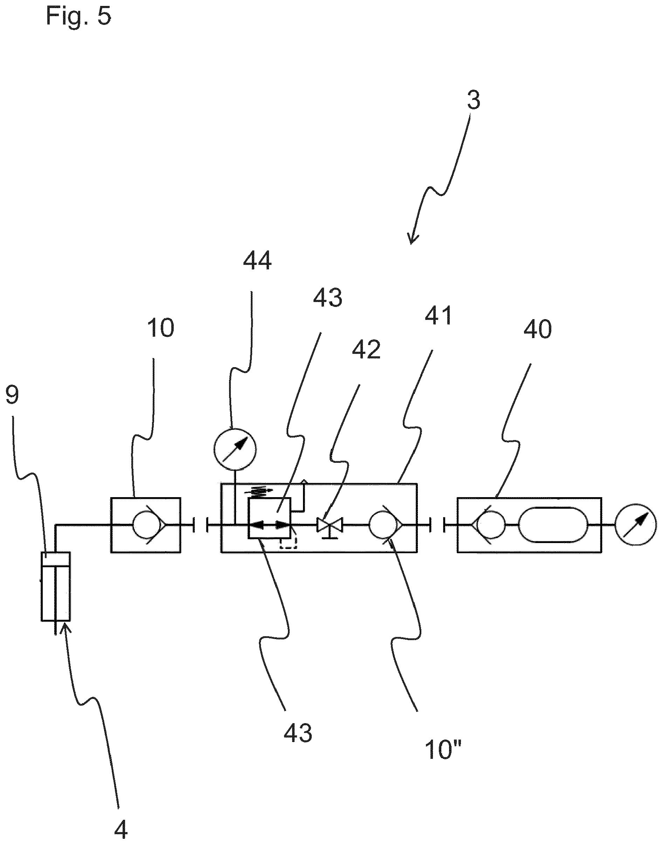

**Fig. 5** zeigt eine schematische Darstellung einer vierten Ausführungsform des Gasfedersystems 3.

Das Gasfedersystem 3 gemäß der vierten Ausführungsform unterscheidet sich von den Gasfedersystemen 3 gemäß der ersten bis dritten Ausführungsform darin, dass keine Pumpe zum Erhöhen des Drucks in dem Gasraum 9 der Gasfeder 4, sondern eine Füllkartusche 40 vorgesehen ist. Die Füllkartusche 40 ist mit der Gasschnittstelle 10 verbindbar, kann aber auch abgenommen werden. Die Füllkartusche 40 hat eine feste, im Wesentlichen zylindrische, Form und somit ein unveränderliches Gasvolumen und ist mit Luft, Stickstoff oder CO₂ mit einem Fülldruck von bis zu 200 bar befüllt. Optional ist die Füllkartusche 40 mit einem Manometer versehen.

In der in Fig. 5 gezeigten Ausführungsform weist das Gasfedersystem 3 ferner einen Anschlussblock 41 auf, der einerseits mit der Gasschnittstelle 10 und andererseits mit der Füllkartusche 40 verbindbar ist. Somit kann die Füllkartusche 40 über den Anschlussblock 41 mit dem Gasraum 9 der Gasfeder 4 verbunden werden. Der Anschlussblock 41 ist mit einem Absperrventil 42, einem Druckminderer
oder -begrenzer 43 und einer zweiten Druckanzeigeeinrichtung 44 versehen. In einer alternativen Ausführungsform ist das Gasfedersystem 3 nicht mit dem Anschlussblock 41 versehen und die Füllkartusche 40 ist direkt mit Gasschnittstelle verbunden. Ferner weist der Anschlussblock 41 eine weitere Gasschnittstelle 10" auf, die als ein Rückschlagventil ausgebildet mit der Füllkartusche 40 verbindbar ist. In weiteren alternativen Ausführungsformen sind das Absperrventil 42 und/oder der Druckminderer oder -begrenzer 43 und/oder die zweite Druckanzeigeeinrichtung 44 nicht vorgesehen. Darüber hinaus ist der Anschlussblock 41 in weiteren alternativen Ausführungsformen entweder in die Füllkartusche 40 oder in die Gasfeder 4 integriert.

Im Betrieb wird die Füllkartusche 40, gegebenenfalls über den Anschlussblock 41, an der Gasschnittstelle 10 angeschlossen und dabei wird entweder automatisch oder nach Öffnen des Absperrventils 42 das mit einem Hochdruck in der Füllkartusche 40 enthaltene Gas in den Gasraum 9 der Gasfeder 4 geleitet, so dass sich der Druck in dem Gasraum 9 der Gasfeder auf einen geeigneten Wert erhöht.

Sollte es erforderlich sein, den Druck in dem Gasraum 9 der Gasfeder 4 zu reduzieren, da sich beispielsweise die Beladung der Tischplatte 5 verringert hat, wird der Druck mit Hilfe des Druckminderers oder-begrenzers 43 oder, falls der Anschlussblock nicht vorhanden ist, mittels eines Hilfswerkzeugs an der Gasschnittstelle 10 verringert.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Gasfedersystem (3) für einen höhenverstellbaren Tisch (1), aufweisend,
eine Gasfeder (4) mit
einem Gasfederzylinder (6) mit einem darin vorgesehenen Gasraum (9),
einem in dem Gasraum (9) angeordneten Gasfederkolben (7) und
einer mit dem Gasfederkolben (7) verbundenen
Gasfederkolbenstange (8),
**dadurch gekennzeichnet, dass**
das Gasfedersystem (3) ferner aufweist:
eine Gasschnittstelle (10), die mit dem Gasraum (9) verbunden ist, wobei die Gasschnittstelle (10) zumindest dazu ausgebildet ist, Gas von außerhalb des Gasfedersystems (3) in das Gasfedersystem (3) einzubringen,
einen Übertragungszylinder (12) mit einem Übertragungskolben (13), einer ersten Übertragungskammer (14) und einer zweiten Übertragungskammer (15), wobei die erste Übertragungskammer (14) und die zweite Übertragungskammer (15) durch den Übertragungskolben (13) getrennt sind, und
eine Hydraulikpumpe (16),
wobei
der Gasraum (9) der Gasfeder (4) mit der ersten Übertragungskammer (14) verbunden ist,
die Hydraulikpumpe (16) mit der zweiten Übertragungskammer (15) verbunden ist,
die Hydraulikpumpe (16) dazu ausgebildet ist, Hydrauliköl zu fördern, und
der Übertragungskolben (13) dazu ausgebildet ist, von dem durch die Hydraulikpumpe (16) geförderten Hydrauliköl in Richtung der ersten Übertragungskammer (14) bewegt zu werden, um einen Druck in der ersten Übertragungskammer (14) und dem Gasraum (9) der Gasfeder (4) zu erhöhen.

2. Gasfedersystem (3) gemäß Anspruch 1, wobei
die Hydraulikpumpe (16) dazu ausgebildet ist, von Hand betätigt zu werden.

3. Gasfedersystem (3) gemäß Anspruch 1 oder 2, wobei
das Gasfedersystem (3) ferner ein Hydraulikölrückschlagventil (18) aufweist, das zwischen der Hydraulikpumpe (16) und der zweiten Übertragungskammer (15) angeordnet ist, und das dazu ausgebildet ist, ein Strömen des Hydrauliköls von der zweiten Übertragungskammer (15) zu der Hydraulikpumpe (16) hin zu verhindern und ein Strömen des Hydrauliköls von der Hydraulikpumpe (16) zu der zweiten Übertragungskammer (15) hin zu ermöglichen.

4. Gasfedersystem (3) gemäß einem der vorangehenden Ansprüche, wobei
das Gasfedersystem (3) ein Ölreservoir (19) und ein Hydrauliköldruckablassventil (20) aufweist, wobei
das Hydrauliköldruckablassventil (20) dazu ausgebildet ist, eine direkte Verbindung zwischen der zweiten Übertragungskammer (15) und dem Ölreservoir (19) herzustellen oder abzutrennen.

5. Gasfedersystem (3), aufweisend,
eine Gasfeder (4) mit
einem Gasfederzylinder (6) mit einem darin vorgesehenen Gasraum (9), einem in dem Gasraum (9) angeordneten Gasfederkolben (7), und einer mit dem Gasfederkolben (7) verbundenen Gasfederkolbenstange
(8), **dadurch gekennzeichnet, dass**
das Gasfedersystem (3) ferner aufweist:
eine Gasschnittstelle (10), die mit dem Gasraum (9) der Gasfeder (4) verbunden ist, wobei die Gasschnittstelle (10) zumindest dazu ausgebildet ist, Gas von außerhalb des Gasfedersystems (3) in das Gasfedersystem (3) einzubringen,
eine Kolbenpumpe (21), die mit dem Gasraum (9) der Gasfeder (4) verbunden ist, und die dazu ausgebildet ist, Gas zu dem Gasraum (9) der Gasfeder (4) zu fördern, wobei
die Kolbenpumpe (21) einen Antriebsmechanismus (22) aufweist, der dazu ausgebildet ist, gemäß dem Kniehebelprinzip zu funktionieren.

6. Gasfedersystem (3) gemäß Anspruch 5, wobei
die Kolbenpumpe (21) einen Pumpenzylinder (23) und einen Pumpenkolben (24) mit einer damit verbundenen in einer vorbestimmten Richtung bewegbaren Pumpenkolbenstange (25) aufweist, und
der Antriebsmechanismus (22) aufweist:
eine relativ zu dem Pumpenzylinder (23) in der vorbestimmten Richtung bewegbare erste Lagerungsvorrichtung (26), wobei die Pumpenkolbenstange (25) mit der ersten Lagerungsvorrichtung (26) verbunden ist,
eine relativ zu dem Pumpenzylinder (23) ortsfeste zweite Lagerungsvorrichtung (27),
einen mit der ersten Lagerungsvorrichtung (26) gelenkig verbundenen ersten Hebel (28), und
einen mit der zweiten Lagerungsvorrichtung (27) und mit dem ersten Hebel (28) jeweils gelenkig verbundenen zweiten Hebel (29), um den Antriebsmechanismus (22) gemäß dem Kniehebelprinzip auszubilden.

7. Gasfedersystem (3) gemäß Anspruch 5 oder 6, wobei
das Gasfedersystem (3) ferner ein Pumprückschlagventil (30) aufweist, das dazu ausgebildet ist, ein Strömen des Gases von dem Gasraum (9) der Gasfeder (4) zu der Kolbenpumpe (21) hin zu verhindern und ein Strömen des Gases von der Kolbenpumpe (21) zu dem Gasraum (9) der Gasfeder (4) hin zu ermöglichen.

8. Gasfedersystem (3) gemäß einem der Ansprüche 5 bis 7, wobei
das Gasfedersystem (3) ferner ein Entlüftungsventil (31) aufweist, das zwischen der Kolbenpumpe (21) und dem Gasraum (9) der Gasfeder (4) vorgesehen ist, und das dazu ausgebildet ist, das Gas aus dem Gasfedersystem (3) abzulassen.

9. Gasfedersystem (3), aufweisend,
eine Gasfeder (4) mit
einem Gasfederzylinder (6) mit einem darin vorgesehenen Gasraum (9), einem in dem Gasraum (9) angeordneten Gasfederkolben (7) und einer mit dem Gasfederkolben (7) verbundenen Gasfederkolbenstange (8), wobei
das Gasfedersystem (3) ferner aufweist:
eine Kolbenpumpe (21'), die mit dem Gasraum (9) der Gasfeder (4) verbunden ist, und die dazu ausgebildet ist, Gas zu dem Gasraum (9) der Gasfeder (4) zu fördern,
**dadurch gekennzeichnet, dass**
die Kolbenpumpe (21') aufweist:
einen mit dem Gasraum (9) der Gasfeder (4) verbundenen ersten Pumpengasraum (32),
einen Pumpenkolben (24'),
einen zweiten Pumpengasraum (33), der durch den Pumpenkolben (24') von dem ersten Pumpengasraum (32) abgegrenzt ist,
ein Pumprückschlagventil (30'), das dazu ausgebildet ist, ein Strömen des Gases von dem Gasraum (9) der Gasfeder (4) zu dem ersten Pumpengasraum (32) hin zu verhindern und ein Strömen des Gases von dem ersten Pumpengasraum (32) zu dem Gasraum (9) der Gasfeder (4) hin zu ermöglichen,
ein Kolbenrückschlagventil (34), das dazu ausgebildet ist, mit dem Pumpenkolben (24') bewegbar zu sein und ein Strömen des Gases von dem ersten Pumpengasraum (32) zu dem zweiten Pumpengasraum (33) hin zu verhindern und ein Strömen des Gases von dem zweiten Pumpengasraum (33) zu dem ersten Pumpengasraum (32) hin zu ermöglichen,
ein Einlassrückschlagventil (35), das dazu ausgebildet ist, ein Strömen des Gases aus dem zweiten Pumpengasraum (33) zu verhindern und ein Strömen des Gases in den zweiten Pumpengasraum (33) zu ermöglichen, wobei
das Gasfedersystem (3) ferner aufweist:
einen zweiten Gasspeicher (38), der mit dem Einlassrückschlagventil (35) verbunden ist,
ein Gasablassventil (37), das einerseits mit dem Gasraum (9) der Gasfeder (4) und andererseits mit dem Einlassrückschlagventil (35) und dem zweiten Gasspeicher (38) verbunden ist, und
eine Gasschnittstelle (10'), die mit dem zweiten Gasspeicher (38) verbunden ist, wobei die Gasschnittstelle (10') zumindest dazu ausgebildet ist, Gas von außerhalb des Gasfedersystems (3) in das Gasfedersystem (3) einzubringen.

10. Gasfedersystem (3) gemäß einem der Ansprüche 5 bis 9, wobei
das Gasfedersystem einen ersten Gasspeicher (36) aufweist, der mit dem Gasraum (9) der Gasfeder (4) verbunden ist.

11. Gasfedersystem (3) gemäß einem der Ansprüche 5 bis 10, wobei
das Gasfedersystem (3) eine erste Druckanzeigeeinrichtung (39) aufweist, die mit dem Gasraum (9) der Gasfeder (4) verbunden ist.

12. Gasfedersystem (3), aufweisend,
eine Gasfeder (4) mit
einem Gasfederzylinder (6) mit einem darin vorgesehenen Gasraum (9), einem in dem Gasraum (9) angeordneten Gasfederkolben (7), und einer mit dem Gasfederkolben (7) verbundene Gasfederkolbenstange
(8), wobei
das Gasfedersystem (3) ferner aufweist:
eine Gasschnittstelle (10), die mit dem Gasraum (9) verbunden ist, und
eine Füllkartusche (40) mit einem unveränderbaren Gasvolumen, die mit der Gasschnittstelle (10) verbindbar ist.

13. Gasfedersystem (3) gemäß Anspruch 12, wobei
das Gasfedersystem (3) ferner einen Anschlussblock (41) aufweist, der einerseits mit der Gasschnittstelle (10) und andererseits mit der Füllkartusche (40) verbindbar ist, wobei der Anschlussblock (41) zumindest eines von einem Absperrventil (42), einem Druckminderer oder -begrenzer (43) und einer zweiten Druckanzeigeeinrichtung (44) aufweist.

14. Höhenverstellbarer Tisch (1) mit einem Gasfedersystem (3) gemäß einem der vorangehenden Ansprüche.

15. Verfahren zum Betreiben eines Gasfedersystems (3) gemäß einem der Ansprüche 1 bis 4 mit dem Schritt:
Pumpen des Hydrauliköls mittels der Hydraulikpumpe (16) in die zweite Übertragungskammer (15), so dass der Übertragungskolben (13) in Richtung der ersten Übertragungskammer (14) bewegt wird und den Druck in der ersten Übertragungskammer (14) erhöht, um eine Kraft der Gasfeder (4) zu erhöhen.

16. Verfahren gemäß Anspruch 15 mit dem Gasfedersystem (3) gemäß Anspruch 4 mit dem Schritt:
Öffnen des Hydrauliköldruckablassventils (20) um eine Verbindung zwischen der zweiten Übertragungskammer (15) und dem Ölreservoir (19) herzustellen und einen Öldruck in der zweiten Übertragungskammer (15) zu verringern, so dass der Übertragungskolben (13) in Richtung der zweiten Übertragungskammer (15) bewegt wird und der Druck in der ersten Übertragungskammer (14) verringert wird, um eine Kraft der Gasfeder (4) zu verringern.

17. Verfahren zum Betreiben eines Gasfedersystems (3) gemäß Anspruch 9, oder Anspruch 9 und Anspruch 10 oder 11, mit den Schritten:
Pumpen von Gas von dem zweiten Gasspeicher (38) zu dem Gasraum (9) der Gasfeder (4) zum Erhöhen einer Kraft der Gasfeder (4); und
Ablassen des Gases aus dem Gasraum (9) der Gasfeder (4) mittels des Gasablassventils (37) zu dem zweiten Gasspeicher (38) zum Verringern der Kraft der Gasfeder (4).
